# EUROPEAN PATENT SPECIFICATION

(11) **EP 1 624 746 B1**
(45) Date of publication and mention of the grant of the patent: **27.09.2006**
(21) Application number: 04732409.0
(22) Date of filing: 12.05.2004
(51) Int. Cl.: A01K 39/012, A01K 31/06, A01K 1/035

(54) **MANGER FOR BIRD'S CAGES**
FÜTTERUNGSVORRICHTUNG FÜR VOGELKÄFIGE
AUGE POUR CAGES A OISEAUX

(30) Priority: 14.05.2003 IT VR20030059
(43) Date of publication of application: 15.02.2006
(73) Proprietor: FERPLAST SPA, 36070 Castelgomberto (VI) (IT)
(72) Inventor: VACCARI, Carlo, I-36070 Castelgomberto (IT)
(74) Representative: Petraz, Gilberto Luigi
(86) International application number: PCT/IT2004/000262
(87) International publication number: WO 2004/100653

(56) References cited:
- US-A- 5 010 846
- US-A- 5 870 969

## Description

### TECHNICAL FIELD

The present invention relates to a manger or feeding trough for cages designed to house pet birds.

More particularly, the present invention relates to a feeding trough or to a drinking trough for cages for canaries, budgerigars, pet birds in general.

This invention is applied in the industry for the production of accessories and products for the care of small pets.

### BACKGROUND ART

The use of removable food dispensers is known in cages designed to hold birds such as canaries, budgerigars and other birds in general, see e.g. document US-A-5 010 846.

The cage is normally made of metal, consisting of a sequence of rigid metal wires arranged as uprights and connected by crosspieces made of the same metal wire, thus forming a well-ventilated, light environment which also protects the birds.

Access to the cage is normally provided by a small door with spring loaded means designed to make it close again immediately to prevent the occupants from escaping.

The cage also has openings designed for the installation of feeding or drinking troughs which comprise a basin, accessible from the inside of the cage, with a lid over the side, facing outwards.

The lid normally tilts to allow easy filling of the dispenser from the outside, without having to remove the feeding or drinking trough, an operation which often leads to it being tipped over and dirtying the bottom of the cage and the surrounding area.

One disadvantage is the fact that pet birds often acquire unthinkable adapted behaviours when faced with some situations.

Experience shows that pet birds increasingly often tend to use their beaks to push the tilting lid, freeing the feeding trough opening, then get out of the cage.

This problem is even more significant if the cage holds two or more birds which manage to escape by copying the behaviour.

### DISCLOSURE OF THE INVENTION

The present invention proposes to provide a feeding trough for cages designed to house pet birds which can eliminate or significantly reduce the above-mentioned disadvantages.

The present invention also proposes to provide a feeding trough which is easily produced and so economically advantageous.

This is achieved by a feeding trough for cages designed to house pet birds with the characteristics described in the main claim herein.

The dependent claims describe advantageous embodiments of the invention.

The feeding trough for cages designed to house pet birds disclosed comprises a container for food or water, having an opening, communicating with the inside of the cage, and an access point, facing the outside of the cage, which can be closed by a lid. The container and the lid have reciprocal sideways sliding means.

In a preferred embodiment of the invention, the reciprocal sideways sliding means consist of recesses in the side faces of the container and a strip on the lid facing the inside of the container.

According to the invention, the access point from the outside of the feeding trough is delimited by a pair of side uprights over the container and having an external profile configured in the same way as the lower surface of the lid so that they match.

Advantageously, the lid has at least one projection, projecting towards the container, designed to engage in a special seat on the external profile of a side upright, so as to guarantee a further guide as the parts slide relative to one another.

Moreover, in one embodiment, the upper surface of the lid has, at each transversal edge, a tab projecting ergonomically and designed to be gripped by the user in order to pull the lid to the open or closed position.

The feeding trough disclosed is normally made of transparent composite plastic, so that the level of its contents is obvious, and it may be coloured.

### BRIEF DESCRIPTION OF THE DRAWINGS

Other features and advantages of the invention are evident in the description which follows, with reference to the accompanying drawings, which illustrate a preferred embodiment of the invention without limiting the scope of the inventive concept, and in which:
- Figure 1 is a perspective view slightly from above of a feeding trough with detached lid;
- Figure 2 is the same view as in Figure 1 with the lid fitted and in the open position;
- Figure 3 is the same view as in the previous figures, with the lid in a partially closed position; and
- Figure 4 is a perspective view slightly from above of a dispenser with the lid in the closed position.

### DESCRIPTION OF AN EMBODIMENT OF THE INVENTION

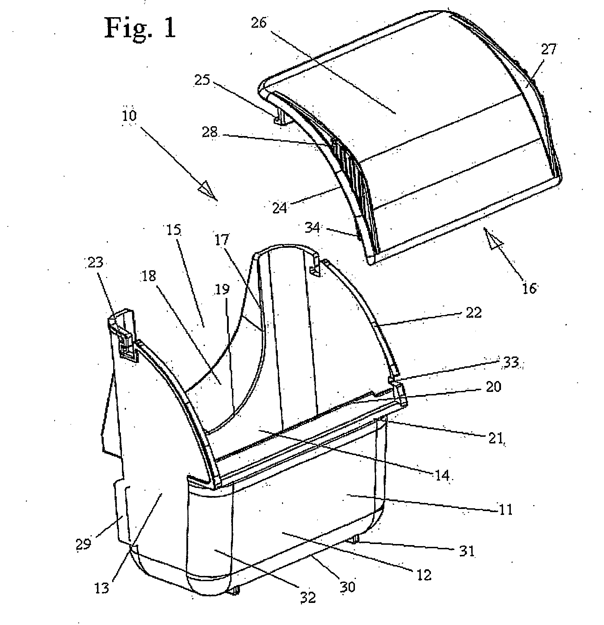

With reference first to Figure 1, the numeral 10 denotes as a whole a dispenser, in the case in question a dispenser 10 designed for use as a feeding or drinking trough for cages designed to house small pet birds.

The feeding trough comprises a container 11, with a basin 12 for holding food or water, having a pair of side uprights 13 delimiting a front access point 14 and a rear opening 15.

The front access point 14, facing the outside of the cage, can be closed by a lid 16.

The front access point 14 and the opening 15 are gaps in the external profile of the side uprights 13 so that, with the lid 16 in the open position, the feeding trough 10 is fully accessible from above.

The rear opening 15, giving onto the inside of the cage, has an external border 17 with a projection 18 projecting towards the outside of the feeding trough 10 and designed to support the pet bird while its eats or drinks the food or water available in the basin 12.

The portion 19 of the rear opening 15 close to the basin 12 may have a semi-circular configuration.

The lower part 20 of the front access point 14 has a small balcony 21, projecting towards the outside of the dispenser 10, from which the external borders 22 of each upright 13 extend.

From the small balcony 21 to the top of the feeding trough 10, each upright 13 has an external border 22 with a profile having a convex curved configuration.

The top of each upright 13 has a recess 23 accessible from above and, for example, "L"-shaped.

The lid 16 has a curved sheet configuration, matching the external border 22 of the uprights 13, convex towards the outside of the feeding trough 10.

The concave lower surface 24 of the lid 16 has a strip 25, extending longitudinally along the entire lid 16, with an "L"-shaped cross-section and intended, in practice, to slidably engage in the recesses 23 in the uprights 13.

At each of its transversal edges, the convex upper surface 26 of the lid 16 has a respective projecting tab 27 intended to allow the user to easily grip and pull the lid 16 to the front access point 14 open or closed position.

The outer side surface of each tab 26 may be rough, for example having ribs 28, to guarantee a secure grip by the user.

The lower side part of the container 11 may have projecting steps 29 to guarantee an appropriate connection to the cage.

The lower surface 30 of the container 11 may have projecting rails 31 designed to guarantee that it rests on the lower edge of the cage opening.

The outer surface of the container 11 has large connectors 32 at the sections where it connects with the uprights 13.

Close to the small balcony 21, a side upright 13 has a recess 33 for a respective projection 34 on the concave lower surface 24 of the lid 16.

Since the opposite upright 13 does not have a corresponding recess 33, the upright without the recess 13 constitutes the end of stroke for lid 16 sliding to the closed position.

In an alternative embodiment not illustrated the cross-section of the strip 25 has an "inverted T"-shaped configuration, like the recesses 23 in the uprights 13.

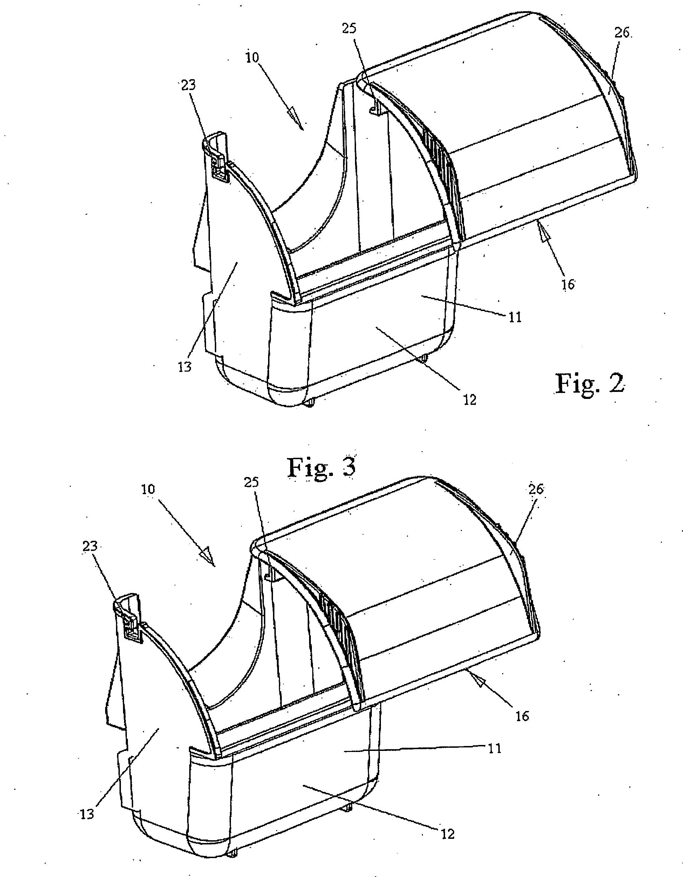

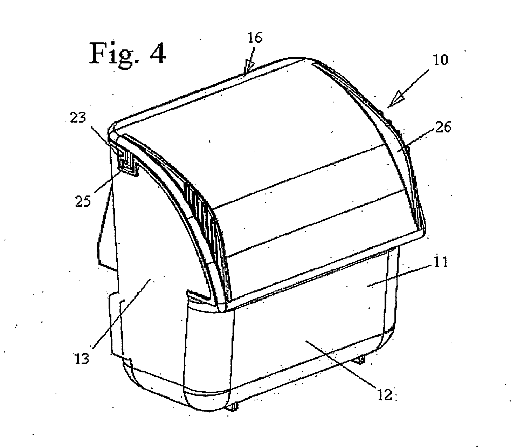

As illustrated in Figures 2, 3, 4, the lid 16 can be fitted on the container 11 until the access point 14 is closed (Figure 4).

In this way, the lid may be subjected to radial thrust from inside the dispenser 10 without moving, guaranteeing that the cage occupied by the small birds is tightly sealed.

The user can easily remove the lid 16, by sliding it sideways so as to clear the front access point 14 to fill the basin 12 with food, for example millet, if the dispenser 10 is intended for use as a feeding trough, or water if the dispenser 10 is for use as a drinking trough.

The dispenser 10 may be made of transparent and coloured composite plastic material.

The above is a description of a preferred embodiment of the invention.

## Claims

1. A dispenser (10), in particular a feeding or drinking trough, for cages designed to house pet birds, comprising a container (11) for food or water, with an opening (15), communicating with the inside of the cage, and an access point (14), facing the outside of the cage, which can be closed by a lid (16), the dispenser being **characterised in that** the container (11) and the lid (16) have reciprocal sideways sliding means.

2. The dispenser (10) according to claim 1, **characterised in that** the reciprocal sideways sliding means consist of recesses (23) in the container (11) side faces or uprights (13) and a strip (25) on the lid (16), the strip facing the inside of the container (11).

3. The dispenser (10) according to claim 2, **characterised in that** the strip (25) has an "L"-shaped cross-section and the recesses (23) have the same "L"-shaped configuration.

4. The dispenser (10) according to claim 2, **characterised in that** the strip (25) has an "inverted T"-shaped configuration and the recesses (23) have the same "inverted T"-shaped configuration.

5. The dispenser (10) according to any of the foregoing claims, **characterised in that** the access point (14) is delimited by the pair of side uprights (13) above the container (11), the uprights having their external profile (22) configured in the same way as the lower surface (24) of the lid (16).

6. The dispenser (10) according to any of the foregoing claims, **characterised in that** the lid (16) has at least one projection (34), projecting towards the container (11) and designed to engage in a special seat (33) on the border (22) of the external profile of the side uprights (13).

7. The dispenser (10) according to any of the foregoing claims, **characterised in that**, at each of its transversal edges, the upper surface (26) of the lid (16) has a projecting tab (27).

8. The dispenser (10) according to claim 7, **characterised in that** the outer side surface of each tab (27) is rough.

9. The dispenser (10) according to any of the foregoing claims, **characterised in that** it is made of transparent and/or coloured composite plastic material.

## Patentansprüche

1. Spender (10), insbesondere ein Futter- oder Trinktrog, für zum Beherbergen von Hausvögeln bestimmte Käfige, umfassend einen Behälter (11) für Futter oder Wasser, mit einer mit der Innenseite des Käfigs in Verbindung stehenden Öffnung (15), und einem der Außenseite des Käfigs zugewandten Zugangspunkt (14), welcher durch einen Deckel (16) geschlossen werden kann, wobei der Spender **dadurch gekennzeichnet ist, dass** der Behälter (11) und der Deckel (16) gegenseitig seitwärts gleitende Mittel aufweisen.

2. Spender (10) nach Anspruch 1, **dadurch gekennzeichnet, dass** die gegenseitig seitwärts gleitenden Mittel aus Ausnehmungen (23) in den Seitenflächen oder -ständern (13) des Behälters (11) und einer Leiste (25) an dem Deckel (16) bestehen, wobei die Leiste der Innenseite des Behälters (11) zugewandt ist.

3. Spender (10) nach Anspruch 2, **dadurch gekennzeichnet, dass** die Leiste (25) einen "L"-förmigen Querschnitt aufweist und die Ausnehmungen (23) dieselbe "L"-förmige Struktur aufweisen.

4. Spender (10) nach Anspruch 2, **dadurch gekennzeichnet, dass** die Leiste (25) eine Struktur in Form von einem "umgedrehten T" aufweist und die Ausnehmungen (23) dieselbe Struktur in Form von einem "umgedrehten T" aufweisen.

5. Spender (10) nach einem der vorhergehenden Ansprüche, **dadurch gekennzeichnet, dass** der Zugangspunkt (14) durch das Paar der Seitenständer (13) oberhalb des Behälters (11) begrenzt ist, wobei die Ständer mit ihrem Außenprofil (22) in derselben Art wie die untere Fläche (24) des Deckels (16) strukturiert sind.

6. Spender (10) nach einem der vorgehenden Ansprüche, **dadurch gekennzeichnet, dass** der Deckel (16) zumindest einen Vorsprung (34) aufweist, welcher in Richtung des Behälters (11) hervorsteht und zum Eingreifen in einen speziellen Sitz (33) an der Kante (22) des Außenprofils der Seitenständer (13) bestimmt ist.

7. Spender (10) nach einem der vorgehenden Ansprüche, **dadurch gekennzeichnet, dass** die obere Fläche (26) des Deckels (16) an jedem seiner quer verlaufenden Ränder einen vorstehenden Streifen (27) aufweist.

8. Spender (10) nach Anspruch 7, **dadurch gekennzeichnet, dass** die äußere seitliche Fläche jedes Streifens (27) rau ist.

9. Spender (10) nach einem der vorgehenden Ansprüche, **dadurch gekennzeichnet, dass** er aus transparentem und/oder farbigem Verbundkunststoffmaterial hergestellt ist.

## Revendications

1. Distributeur (10), en particulier auge ou abreuvoir, pour cages destinées à loger des oiseaux de compagnie, comportant un récipient (11) pour la nourriture ou l'eau, avec une ouverture (15), communiquant avec l'intérieur de la cage, et un point d'accès (14), faisant face à l'extérieur de la cage, qui peut être fermée par un couvercle (16), distributeur **caractérisé en ce que** le récipient (11) et le couvercle (16) ont des moyens de coulissement latéraux complémentaires.

2. Distributeur (10) selon la revendication 1, **caractérisé en ce que** les moyens de coulissement latéraux complémentaires sont constitués de rainures (23) dans les faces latérales ou montants (13) du récipient (11) et d'une barre (25) sur le couvercle (16), la barre faisant face à l'intérieur du récipient (11).

3. Distributeur (10) selon la revendication 2, **caractérisé en ce que** la barre (25) a une section transversale en forme de L et les rainures (23) ont la même configuration en forme de L.

4. Distributeur (10) selon la revendication 2, **caractérisé en ce que** la barre (25) a une configuration en forme de T inversé et les rainures (23) ont la même configuration en forme de T inversé.

5. Distributeur (10) selon l'une quelconque des revendications précédentes, **caractérisé en ce que** le point d'accès (14) est délimité par une paire de montants latéraux (13) au-dessus du récipient 11, les montants ayant leur profil externe (22) configurés de la même façon que la surface inférieure (24) du couvercle (16).

6. Distributeur (10) selon l'une quelconque des revendications précédentes, **caractérisé en ce que** le couvercle (16) a au moins un élément en saillie (34), faisant saillie vers le récipient (11) et destinée à s'engager dans un logement spécial (33) sur la bordure (22) du profil externe des montants latéraux (13).

7. Distributeur (10) selon l'une quelconque des revendications précédentes, **caractérisé en ce que**, sur chacun de ses bords transversaux, la surface supérieure (26) du couvercle (16) a une patte en saillie (27).

8. Distributeur (10) selon la revendication 7, **caractérisé en ce que** la surface latérale externe de chaque patte (27) est rugueuse.

9. Distributeur (10) selon l'une quelconque des revendications précédentes, **caractérisé en ce qu'**il est réalisé en matériau plastique composite coloré et/ou transparent.
